# FASCICULE DE BREVET EUROPEEN

(11) **EP 2 037 864 B1**
(45) Date de publication et mention de la délivrance du brevet: **11.12.2013**
(21) Numéro de dépôt: 07787196.0
(22) Date de dépôt: 06.07.2007
(51) Int. Cl.: A61J 15/00

(54) **MONTAGE D'UN TUBE DE GASTROSTOMIE SUR UNE EMBASE ET BOUTON DE GASTROSTOMIE**
ARMATUR ZUR BEFESTIGUNG EINES GASTROSTOMIE-SCHLAUCHS AN EINER BASIS UND GASTROSTOMIE-TASTE
FIXTURE FOR MOUNTING A GASTROSTOMY TUBE ON A BASE, AND GASTROSTOMY BUTTON

(30) Priorité: 06.07.2006 FR 0606140
(43) Date de publication de la demande: 25.03.2009
(73) Titulaire: Regnault, Stéphane, 92500 Rueil-Malmaison (FR)
(72) Inventeur: Regnault, Stéphane, 92500 Rueil-Malmaison (FR)
(74) Mandataire: Regimbeau
(86) Numéro de dépôt international: PCT/EP2007/056914
(87) Numéro de publication internationale: WO 2008/003785

(56) Documents cités:
- EP-A- 1 388 841
- WO-A-95/23001
- GB-A- 2 098 692
- US-A1- 3 788 676
- US-A1- 4 944 732

## Description

Un tube de gastrostomie est conçu pour être introduit dans un passage (stoma) qui traverse la peau et la paroi abdominale jusqu'à déboucher dans la cavité gastrique.

Ce tube est normalement fixé à une embase appliquée sur la peau autour du stoma , cette embase définissant une chambre de transit avec laquelle le tube doit communiquer.

La présente invention concerne la fixation du tube de gastrostomie à l'embase.

Ce montage doit remplir les conditions suivantes :
- permettre une adaptation de la longueur du tube à la longueur du stoma.
- être peu encombrant.
- assurer une bonne élasticité entre l'embase, le tube et le stoma.
- être démontable.

On connaît des solutions qui consistent à choisir le tube dans une collection de tubes de longueurs différentes, comme prévu par exemple dans les publications US 4 863 438 et US 5 336 203. Ce type de solution permet de conformer spécialement l'extrémité proximale du tube de façon à assurer la fixation à l'embase et l'étanchéité mais elle implique de disposer d'une collection de tubes de longueurs différentes et ne permet qu'une adaptation approximative de la longueur du tube à celle du stoma.

On connaît également des solutions dans lesquelles le tube est coupé à la demande pour adapter sa longueur, comme prévu par exemple dans la publication US 4 944 732. Ce type de solution permet une adaptation précise de la longueur du tube mais nécessite de disposer d'une solution performante pour fixer avec étanchéité le tube à l'embase.

Une solution connue, comme décrit dans la publication US 4 944 732, consiste à emmancher et coller l'extrémité du tube sur un embout tubulaire de l'embase.

Cette solution, ne permet pas un démontage du tube et n'assure pas une tenue en traction suffisante entre le tube et l'embout.

La présente invention vise à permettre de couper le tube à la demande pour l'adapter à la longueur du stoma, en évitant les inconvénients précités.

On y parvient, selon l'invention, en munissant l'embase d'un embout tubulaire métallique fileté extérieurement, le filetage étant constitué de filets fins et tranchant, et en choisissant le tube et l'embout en sorte que le tube coupé à la demande puisse être emmanché à force sur l'embout et tourné sur lui-même pour que le filetage de l'embout s'imprime dans la paroi du tube en créant des hélices correspondantes.

Les matériaux du tube et de l'embout et les dimensions transversales du tube et de l'embout sont choisis en conséquence.

Ce montage assure une grande tenue en traction entre le tube et l'embout.

Si le patient décidait de tirer sur l'embase, fortement, un emmanchement simple tube sur embout lisse ne serait pas suffisant, car il y aurait glissement. Par contre les filets/contre filets résistent mécaniquement à cette traction sans glisser. D'autre part quand le tube est introduit dans l'estomac, et si on tourne l'embase, le tube tourne aussi dans le même sens, ce qui rend le dévissage impossible.

Dans une solution préférée, l'embout fait partie d'un insert métallique incorporé à l'embase.

Avantageusement, cet insert est conçu pour assurer une triple fonction :
- le montage du tube
- le logement de la valve
- la tenue du couvercle

Le dispositif peut être complété par une rondelle d'un matériau plastique élastique qu'on a mis préalablement sur le tube mis à longueur avant de « visser » le tube sur l'embout fileté de l'insert.

Quand le tube est vissé sur l'embout, on pousse cette rondelle contre la face inférieure de l'embase. La rondelle va serrer le tube contre les filets de l'embout et améliorer la tenue en traction du tube sur l'embase.

On décrira ci-après, à titre d'exemple, une réalisation conforme à l'invention en référence aux figures du dessin joint sur lequel :
- la figure 1 est une perspective schématique éclatée d'un bouton de gastrostomie ;
- la figure 2 est une coupe axiale du bouton de la figure 1, après assemblage ;
- la figure 3 est analogue à la figure 2 mais avec un connecteur raccordé sur l'embase ;

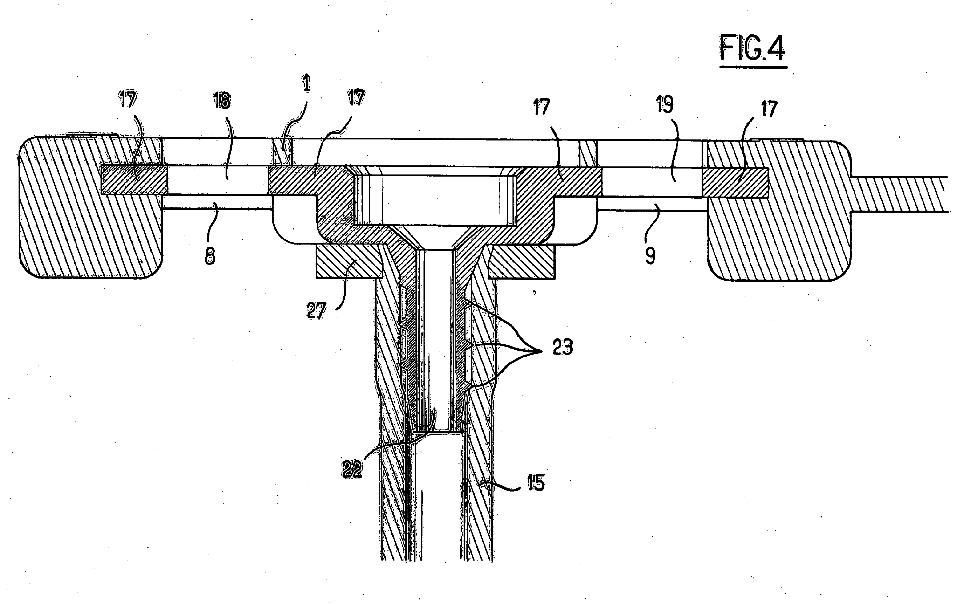

- la figure 4 est une coupe axiale de l'embase, le capot étant ôté ;
- la figure 5A est une vue tridimensionnelle d'un instrument de montage de l'embase sur le tube de gastrostomie pour former un bouton de gastrostomie selon l'invention ;
- la figure 5B est une vue tridimensionnelle du montage d'un bouton de gastrostomie avec l'instrument de la figure 5A ;
- la figure 6 est une vue tridimensionnelle d'un instrument de maintien d'un bouton de gastrostomie selon l'invention;
- les figures 7A et 7B sont des vues tridimensionnelles d'un instrument de changement de valve d'un bouton de gastrostomie selon l'invention ;
- les figures 8A à 8C sont des vues tridimensionnelle des étapes de changements de la valve d'un bouton de gastrostomie selon l'invention ;
- la figure 9A est une vue tridimensionnelle d'un prolongateur d'alimentation équipé d'un embout coudé connectable sur un bouton de gastrostomie selon l'invention, et ;
- la figure 9B est une vue tridimensionnelle d'un embout droit pour le prolongateur d'alimentation de la figure 9A.

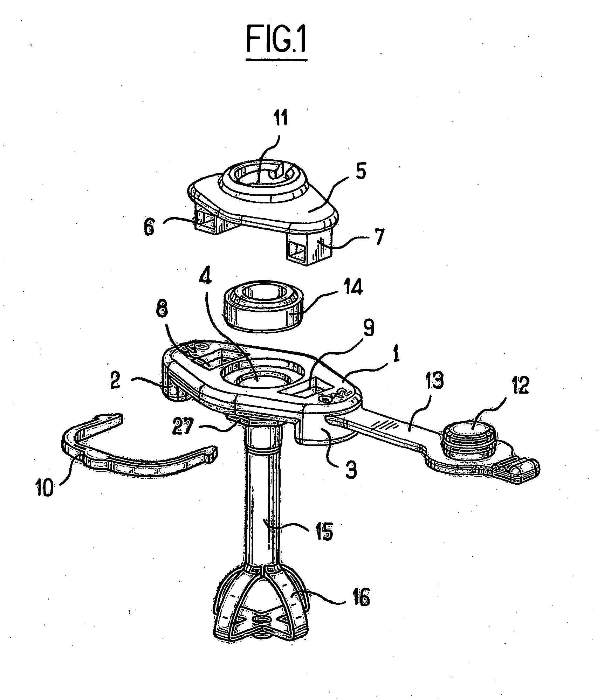

On a représenté sur la figure 1 un « bouton » de gastrostomie constitué des pièces suivantes :
- une embase (1) en résine de synthèse à appliquer sur la peau autour d'un stoma, cette embase comportant deux pieds d'application (2,3) et déterminant une chambre de transit (4) qui traverse l'embase dans l'axe du stoma ;
- un capot (5) monté sur l'embase au dessus de la chambre (4), par introduction de deux pattes (6,7) situées en sous face du capot dans deux passages correspondants (8,9) formés au travers de l'embase et maintien de ces pattes par un clip (10) introduit latéralement sous l'embase entre les pieds de l'embase. Ce capot détermine un passage traversant (11) communiquant avec la chambre ;

- un couvercle (12) attaché à l'embase par une patte (13) et rabattable sur le capot pour fermer le passage du capot ;
- une valve (14) à introduire dans la chambre (4) de l'embase ;
- un tube (15) en résine de synthèse coupé à la demande, rapporté sur l'embase dans l'axe de la chambre, ce tube étant destiné à traverser le stoma et à être retenu dans la cavité gastrique par un élément de maintien (16).

Ce bouton ainsi défini présente des avantages propres sur les boutons connus mais ne constitue qu'un exemple non limitatif d'un bouton auquel peut être appliquée la présente invention.

De fait, l'invention porte d'abord sur la fixation du tube (15) à l'embase (1).

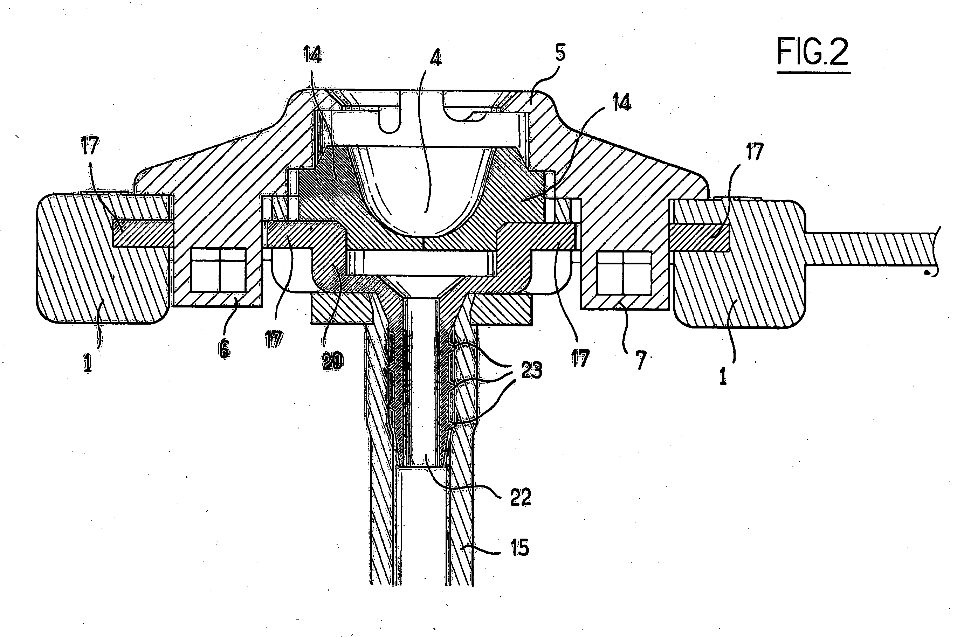

Conformément à l'invention (fig.2), l'embase (1) comporte un insert métallique conformé pour constituer un disque (17) noyé dans l'embase, percé de deux trous latéraux (18,19) pour le passage des pattes du capot, un moyeu (20) formé au centre du disque pour se loger dans la chambre (4) en déterminant un creux central 25 apte à recevoir en partie la valve (14), et un embout tubulaire (22) situé dans l'axe du moyeu, en communication avec la chambre et en saillie sous l'embase.

L'embout métallique (22) présente un filetage extérieur constitué de filets fins et tranchants (23).

Les matériaux et les diamètres de l'extrémité proximale du tube et de l'embout sont choisis pour que le tube (15) puisse être enfilé à force sur l'embout et tourné sur lui-même en sorte que le filetage (23) de l'embout s'inscrive dans la face interne de la paroi du tube.

La fixation du tube (15) à l'embase (1) est renforcée par une rondelle élastique (27).

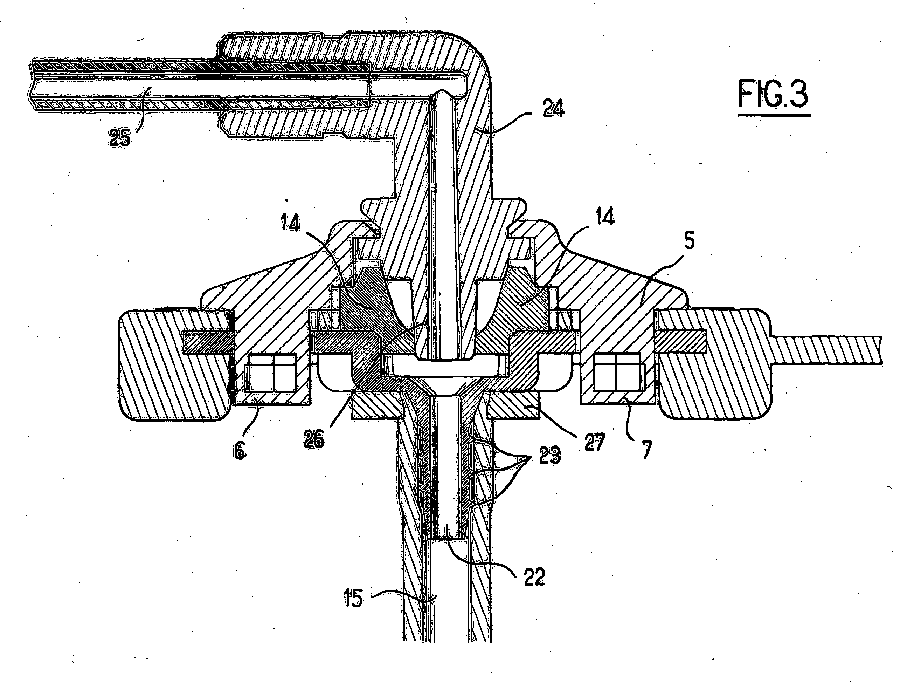

La figure 3 est une vue correspondante à celle de la figure 2 mais avec un connecteur coudé (24) introduit dans le passage (11) du capot pour raccorder ce passage et la chambre de l'embase avec un cathéter d'alimentation (25).

Ce connecteur (24) comporte un embout (26) qui passe à force au travers de la valve (14) avec étanchéité latérale.

Selon une variante de réalisation de l'embase (1); le capot (5) est monté vissé sur l'embase au dessus de la chambre (4).

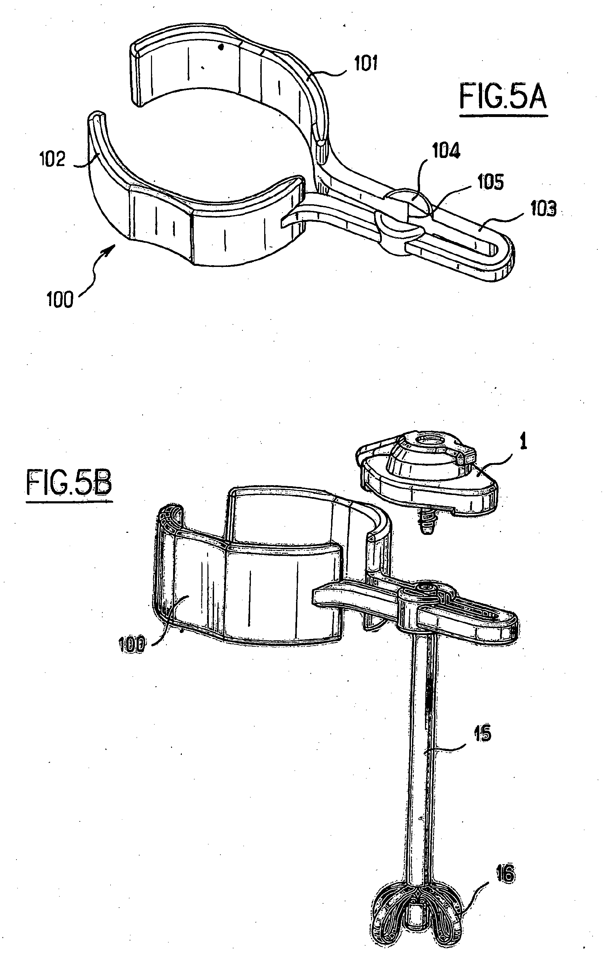

En références au figure 5A et 5B, nous allons décrire un instrument (100) de montage de l'embase (1) sur le tube de gastrostomie (15). L'instrument (100) est en forme de pince comportant deus poignées (101, 102) de manipulation formant les extrémités de deux branches formant un «U » (103) déformable élastiquement. Au niveau d'un milieu de chacune des branches du « U », l'instrument comporte des moyens d'interfaçage (104) avec le tube de gastrostomie (15). Les moyens d'interfaçage (104) comprennent une gorge (105) sensiblement rectiligné et sensiblement perpendiculaires aux branches du « U » (103), la gorge étant ouverte vers l'intérieur du « U ». La gorge (105) est apte à recevoir le tube de gastrostomie (15).

Lors d'un montage de l'embase (1) sur le tube (15), l'extrémité opposée à l'élément de maintient (16) est serrée dans les moyens d'interfaçage (104), le tube étant reçu dans la gorge (105). Puis l'embase est vissée dans le tube comme cela à été décrit précédemment. L'instrument de montage (100) est réalisé en plastique et permet d'éviter de déformer le tube tout en limitant le serrage possible. Ainsi, lorsque l'embase vient en butée sur le tube en fin de serrage, si le mouvement de serrage se poursuit, l'ensemble du bouton tourne, le tube (15) tournant dans l'instrument de montage (100). La destruction du filet réalisé dans le tube est évitée et la bonne tenue à terme de l'ensemble formant le bouton est assurée.

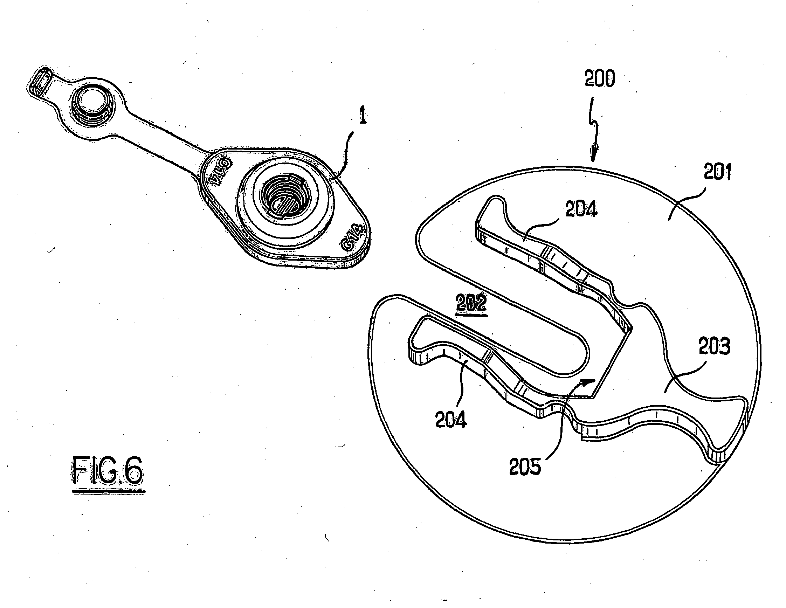

Si après plusieurs mois (par exemple) d'utilisation, on veut changer le bouton, on utilise en premier lieu un instrument de maintient (200) tel qu'illustré en figure 6. Cet instrument (200) comporte une plaque (201), de forme circulaire, présentant une ouverture (202) en forme de « U » allongé s'étendant sensiblement radialement depuis un centre de la plaque jusqu'à une circonférence radialement externe. Cette ouverture est apte à recevoir à coulissement le tube de gastrostomie. Une poignée (203) s'étend en saillie depuis une surface de la plaque dans le prolongement diamétrale de l'ouverture (202) et comporte une cavité (205) ouverte vers le centre et l'ouverture (202). Cette cavité est apte à recevoir à coulissement un des pieds de l'embase. L'instrument de maintient comporte en outre deux ailes déformables élastiquement (204) s'étendant en regard l'une de l'autre de part et d'autre de l'ouverture (202). Une fois déformées en les rapprochant l'une de l'autre, ces ailes permettent de maintenir en place dans l'instrument l'embase, d'une part, et, d'autre part, de bloquer le bouton en rotation et en mouvement de décollement ou de pression sur la peau, lors d'une utilisation.

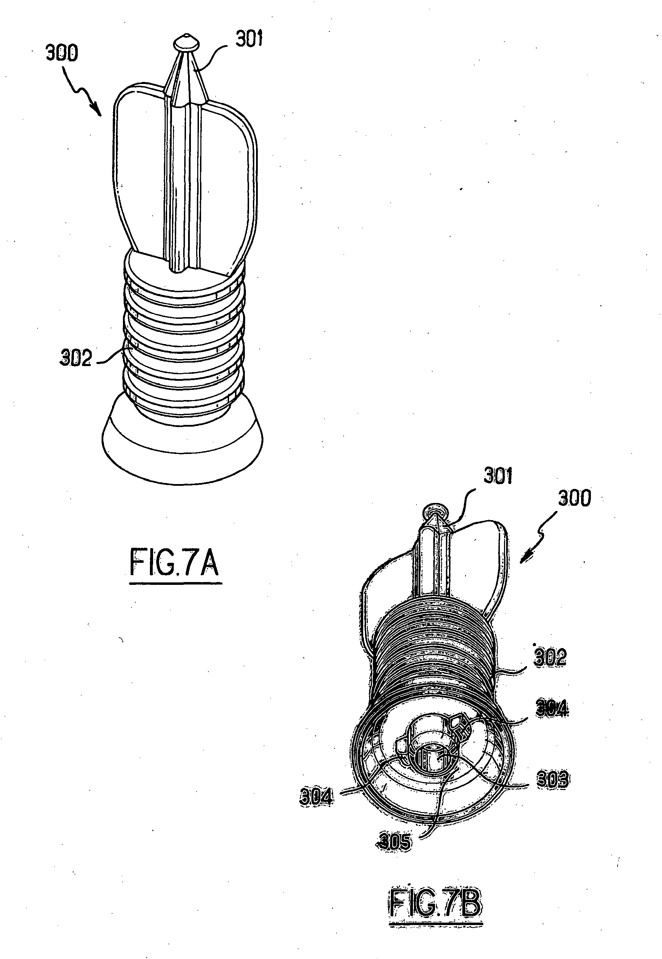

En référence aux figures 7A et 7B, nous allons décrire un instrument de changement de valve (300). Ce dernier est de forme générale cylindrique de révolution. Il comporte une première extrémité (301) en forme de harpon. Il comporte une deuxième extrémité (303) avec une forme en relief (303,304) complémentaire sensiblement du passage traversant (11) et une forme en creux (305) complémentaire sensiblement de la forme extérieure du capot (5). La forme en relief comprend deux ailettes (304) diamétralement opposées l'une de l'autre et s'étendant dans la forme en creux. Entre les deux extrémités, l'instrument de changement de valve comporte une poignée (302).

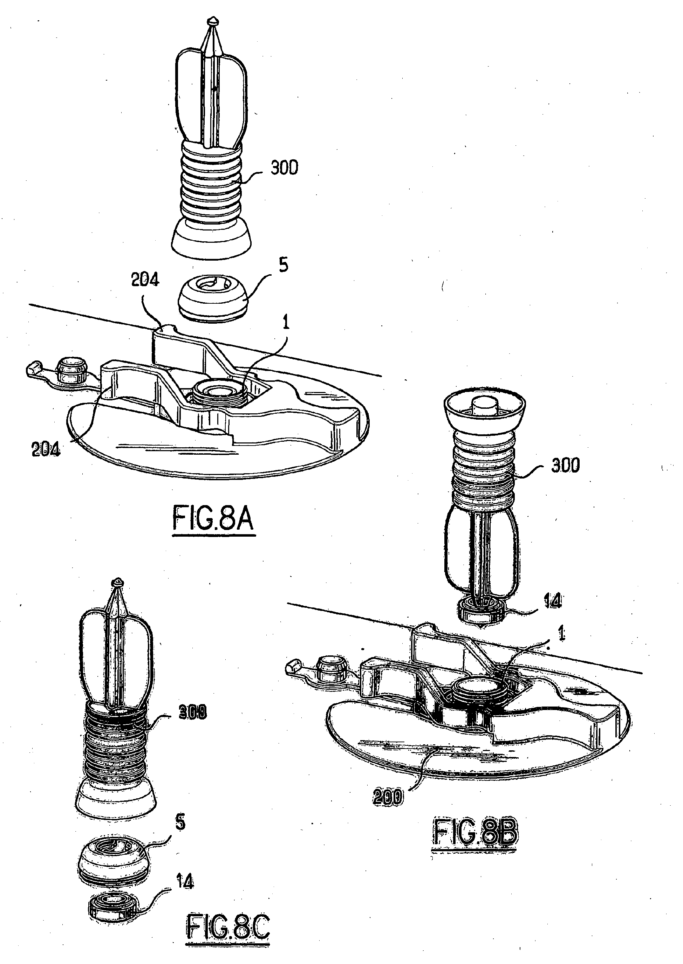

En référence aux figures 8A à 8C, l'instrument de maintient (200) est glissée entre la peau et l'embase (1), puis l'instrument de changement de valve (300) est connecté dans le capot (5) part son extrémité (303). Le capot est alors dévissé par coopération des ailettes (304) coopérant avec des formes complémentaires aménagées en périphérie du passage traversant (11), formes qui sont de type baïonnette. Ceci permet de retirer le capot (5) . Ensuite, la valve usagée (14) est « harponnée » avec l'autre extrémité (301) de l'instrument de changement de valve et retirée comme illustré à la figure 8B. Le capot (5) est replacé dans la forme en creux de l'extrémité (303), puis la valve neuve (15) est introduite dans le capot (5), puis l'ensemble est remonté sur l'embase à l'aide de l'instrument de changement de valve (300).

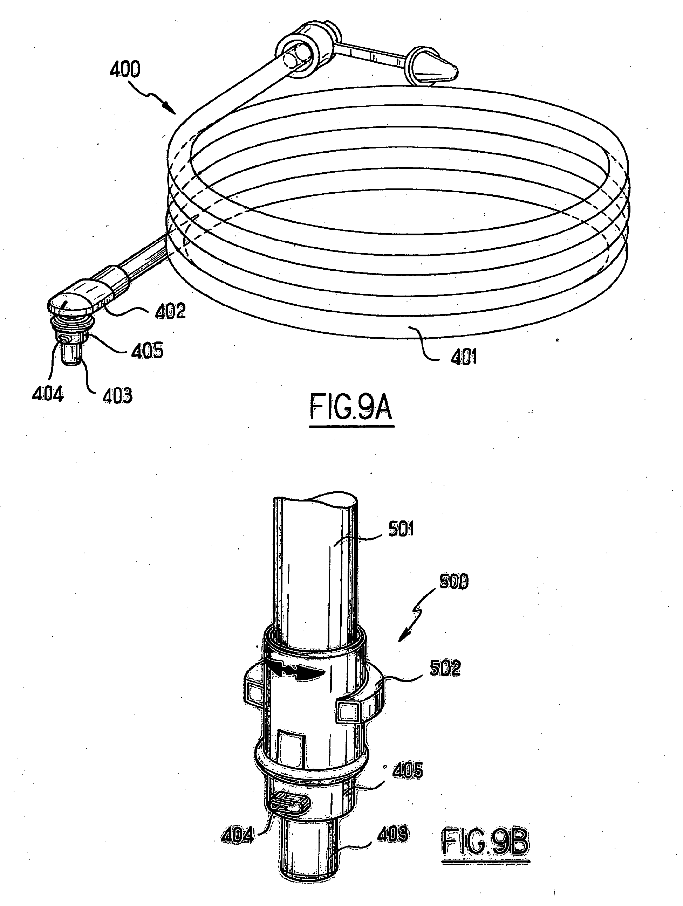

En référence aux figures 9A et 9B, nous allons décrire un prolongateur d'alimentation (400, 500)) apte à être monté sur un bouton de gastrostomie selon l'invention. Ce prolongateur comprend un tube (401, 501) flexible dont l'une des extrémités comporte un embout de connexion (402, 502). Cette embout peut être coudée (402) ou droit (502). Dans les deux cas, l'embout comprend une extrémité (403) cylindrique de révolution apte à agir sur la valve (15) afin de l'ouvrir lorsque l'embout est connecté sur le bouton de gastrostomie via le passage traversant (11). Cette extrémité est surmontée d'une partie (405) de forme cylindrique de révolution sensiblement complémentaire du passage traversant (11). Deux ailettes (404) diamétralement opposées s'étendent en saillie de la partie (402) et sont aptes à coopérer avec les formes de type baïonnette complémentaires aménagées en périphérie du passage traversant (11). Cela permet de réaliser une connexion baïonnette avec un blocage de l'embout dans l'embase.

L'invention n'est pas limitée à la réalisation qui a été décrite. Elle s'applique notamment à tout type d'embase, quelle que soit la fixation du, capot à l'embase et les autres détails de réalisation du bouton, dans le cadre des revendications.

## Revendications

1. Montage d'un tube de gastrostomie (15) coupé à la demande sur une embase (1) à appliquer sur la peau autour d'un stoma, la dite embase comportant un embout (22) pour le montage du tube sur l'embase, **caractérisé en ce que** l'embout est métallique et présente un filetage extérieur (23) constitué de filets fins et tranchants et **en ce que** le tube et l'embout sont choisis pour que le tube puisse être emmanché à force sur l'embout et tourné sur lui-même en sorte que le filetage de l'embout s'imprime dans la paroi du tube en créant des hélices correspondantes qui assurent une grande tenue à la traction entre le tube et l'embout.

2. Montage selon la revendication dont le tube est en résine de synthèse.

3. Montage selon l'une des revendications 1 ou 2 dans lequel l'embout (22) de l'embase fait partie d'un insert noyé dans l'embase.

4. Montage selon l'une des revendications 1 à 3 et qui comprend une rondelle élastique (27) enfilée sur le tube, avant de visser le tube sur l'embout, pour serrer le tube contre les filets de l'embout.

5. Bouton de gastrostomie qui comporte une embase en résine de synthèse (1) à appliquer sur la peau autour d'un stoma, cette embase déterminant une chambre (4) qui traverse l'embase, un capot (5) à monter sur l'embase au-dessus de la chambre (4), ce capot déterminant un passage traversant (11) communiquant avec la chambre, un couvercle (12) pour fermer le capot, et un tube de gastrostomie (15) coupé à la demande et fixé à l'embase, **caractérisé en ce que** l'embase comporte un insert qui constitue un embout (22) métallique fileté extérieurement constitué de filets fins et tranchants en saillie sous l'embase et **en ce que** les diamètres et les matières de l'embout et du tube sont choisis en sorte que le tube puisse être emmanché à force et en le tournant sur l'embout (22) et que le filetage de l'embout s'imprime dans la paroi du tube en créant dans la face interne de la paroi du tube un filetage correspondant.

6. Bouton selon la revendication 5 dans lequel ledit insert comprend un disque (17) noyé dans l'embase et un embout (22) en saillie sur une face de ce disque.

7. Bouton selon la revendication 6 dans lequel le disque de l'insert comporte des trous (18,19) pour le passage de pattes de fixation (6,7) du capot (5) sur l'embase (1).

8. Bouton selon l'une des revendications 5 à 7 dans lequel l'insert comporte un moyeu (20) formé au centre du disque pour loger une valve (14) dans la chambre (4) de l'embase (1) .

9. Bouton selon l'une des revendications 5 à 8 et qui comporte une rondelle élastique (27) enfilée sur le tube pour serrer le tube contre les filets de l'embout.

10. Bouton selon l'une des revendications 5 à 9 dont ledit tube (15) est en résine de synthèse.

## Patentansprüche

1. Anordnung eines nach Bedarf zugeschnittenen Gastrostomie-Schlauchs an einem Basisteil (1), das an die Haut um ein Stoma herum anzulegen ist, wobei das Basisteil ein Ansatzstück (22) zum Anordnen des Schlauchs an das Basisteil aufweist, **dadurch gekennzeichnet, dass** das Ansatzstück aus Metall besteht und ein Außengewinde (23) aufweist, das aus feinen, schneidenden Gewindegängen besteht, und dass der Schlauch und das Ansatzstück so ausgewählt sind, dass der Schlauch auf das Ansatzstück aufgepresst werden kann und um sich selbst drehbar ist, so dass das Gewinde des Ansatzstücks sich in die Wand des Schlauchs eindrückt und dabei entsprechende Schraubenlinien erzeugt, die einen starken Halt gegen Zugkraft zwischen Schlauch und Ansatzstück gewährleisten.

2. Anordnung nach dem Anspruch, bei welcher der Schlauch aus synthetischem Harz besteht.

3. Anordnung nach einem der Ansprüche 1 oder 2, wobei das Ansatzstück (22) des Basisteils zu einem Einsatz gehört, der in das Basisteil eingebettet ist.

4. Anordnung nach einem der Ansprüche 1 bis 3, umfassend eine Federscheibe (27), die auf den Schlauch aufgeschoben wird, bevor der Schlauch auf das Ansatzstück aufgeschraubt wird, um den Schlauch gegen die Gewindegänge des Ansatzstücks zu verspannen.

5. Gastrostomie-Sonde, die ein Basisteil aus synthetischem Harz (1) aufweist, das an die Haut um ein Stoma herum anzulegen ist, wobei dieses Basisteil eine Kammer (4) definiert, die sich durch das Basisteil erstreckt, sowie eine Haube (5), die oberhalb der Kammer (4) auf das Basisteil anzuordnen ist, wobei diese Haube einen durchgehenden Durchgang (11) definiert, der mit der Kammer kommuniziert, einen Deckel (12), um die Haube zu verschließen, und einen Gastrostomie-Schlauch (15), der nach Bedarf zugeschnitten wird und an das Basisteil befestigt wird, **dadurch gekennzeichnet, dass** das Basisteil einen Einsatz aufweist, welcher ein Ansatzstück (22) bildet, das aus Metall besteht und ein Außengewinde mit feinen, schneidenden Gewindegängen hat, das unter dem Basisteil vorspringt , und dass die Durchmesser und die Materialien von Ansatzstück und Schlauch so ausgewählt sind, dass der Schlauch drehend auf das Ansatzstück (22) aufgepresst werden kann und dass das Gewinde des Ansatzstücks sich in die Wand des Schlauchs eindrückt und dabei in der Innenseite der Wand des Schlauchs ein entsprechendes Gewinde erzeugt.

6. Sonde nach Anspruch 5, wobei der Einsatz eine in das Basisteil eingebettete Scheibe (17) und ein Ansatzstück (22) aufweist, das an einer Seite dieser Scheibe vorspringt.

7. Sonde nach Anspruch 6, wobei die Scheibe des Einsatzes Löcher (18, 19) für den Durchtritt von Befestigungslaschen (6, 7) zum Befestigen der Haube (5) an das Basisteil (1) aufweist.

8. Sonde nach einem der Ansprüche 5 bis 7, wobei der Einsatz eine Nabe (20) aufweist, die im Zentrum der Scheibe ausgebildet ist, um ein Ventil (14) in der Kammer (4) des Basisteils (1) aufzunehmen.

9. Sonde nach einem der Ansprüche 5 bis 8, umfassend eine Federscheibe (27), die auf den Schlauch aufgeschoben ist, um den Schlauch gegen das Gewinde des Ansatzstücks zu verspannen.

10. Sonde nach einem der Ansprüche 5 bis 9, bei welcher der Schlauch (15) aus synthetischem Harz besteht.

## Claims

1. Fixture of a gastrostomy tube (15) cut to the required length on a base (1) to be applied on the skin around a stoma, said base comprising a connector piece (22) for mounting the tube on the base, **characterised in that** the connector piece is metallic and comprises an external thread (23) formed by fine and sharp threads, and **in that** the tube and the connector piece are chosen such that the tube can be engaged with force on the connector piece and turned about itself in such a way that the thread of the connector piece imprints itself in the wall of the tube, thereby creating corresponding helical thread that ensure good resistance to traction between the tube and the connector piece.

2. Fixture according to the claim wherein the tube is made of synthetic resin.

3. Fixture according to one of claims 1 or 2 wherein the connector piece (22) of the base is part of an insert embedded in the base.

4. Fixture according to one of claims 1 to 3 and which comprises an elastic washer (27) threaded on the tube, before screwing the tube on the connector piece, to clamp the tube against the threads of the connector piece.

5. Gastrostomy button which comprises a base made of synthetic resin (1) to be applied on the skin around a stoma, said base determining a transit chamber (4) passing through the base, a cap (5) to be fixed on the base at the top of the chamber (4), said cap determining an open passage (11) communicating with the chamber, a cover (12) to close the cap, and a gastrostomy tube (15) cut to the required length and fixed on the base, **characterised in that** the base comprises an insert forming an external threaded metallic connector piece (22) formed by fine and sharp threads protruding under the base and **in that** the diameters and the materials of the connector piece and the tube are selected such that the tube can be engaged with force and by turning on the connector piece (22) and **in that** the thread of the connector piece imprints itself in the wall of the tube, thereby creating a corresponding thread in the internal face of the wall of the tube.

6. Button according to claim 5, wherein said insert comprises a disk (17) embedded in the base and a connector piece (22) protruding from one face of said disk.

7. Button according to claim 6 wherein the disk of the insert comprises holes (18, 19) for the passage of fixture tabs (6, 7) of the cap (5) on the base (1).

8. Button according to one of claims 5 to 7 wherein the insert comprises a hub (20) formed at the centre of the disk to house a valve (14) in the chamber (4) of the base (1).

9. Button according to one of claims 5 to 8 and which comprises an elastic washer (27) threaded on the tube to clamp the tube against the threads of the connector piece.

10. Button according to one of claims 5 to 9 wherein said tube (15) is made of synthetic resin.
